# EUROPEAN PATENT APPLICATION

(11) **EP 4 793 918 A1**
(43) Date of publication of application: **19.08.2026**
(21) Application number: 25217039.4
(22) Date of filing: 19.11.2025
(51) Int. Cl.: G08B 21/02, G08B 21/22, G06V 40/16

(54) **IN-VEHICLE INFANT-AND-TODDLER MONITORING METHOD AND IN-VEHICLE INFANT-AND-TODDLER MONITORING SYSTEM**

(30) Priority: 13.02.2025 TW 114105316
(71) Applicant: NetKlass Technology Inc., Zhubei City, Hsinchu County 302082 (TW)
(72) Inventor: LEE, Ming-Tang, 302082 Zhubei City, Hsinchu County (TW)
(74) Representative: 2K Patent Partnerschaft mbB

(57) **Abstract**

An in-vehicle infant-and-toddler monitoring method includes: (a) shooting a child seat in a rear seat in a vehicle by a rear-seat infant-and-toddler monitoring apparatus (1) to capture a video-and-audio signal, wherein the rear-seat infant-and-toddler monitoring apparatus (1) is directed toward the child seat; (b) inputting the video-and-audio signal into an artificial intelligence engine (121), to analyze a video of the video-and-audio signal to detect a facial expression of an infant or a toddler, and to analyze an audio emotion of the infant or the toddler based on an audio feature, to generate a notification event corresponding to a current emotion of the infant or the toddler; (c) sending the notification event by the rear-seat infant-and-toddler monitoring apparatus (1) to a front-seat display apparatus (2); (d) streaming and retrieving the video-and-audio signal by the front-seat display apparatus (2) from a video-and-audio processing module (12) based on the notification event to display the video-and-audio signal; and (e) notifying the rear-seat infant-and-toddler monitoring apparatus (1) by the front-seat display apparatus (2) based on the notification event to request a streaming video-and-audio packet to play the video-and-audio signal of the infant or the toddler by the front-seat display apparatus (2) in a front seat in the vehicle.

## Description

### BACKGROUND OF THE DISCLOSURE

### Technical Field

The present disclosure relates to an in-vehicle passenger monitoring system and method, and especially relates to an in-vehicle infant-and-toddler monitoring system and method.

### Description of Related Art

Infants and toddlers are physically small and fragile and may not care for themselves, requiring a caregiver to be constantly present. The activity periods of infants and toddlers are usually irregular. The caregiver sometimes interacts with the infant or the toddler, and the infant or the toddler is allowed to play or move independently sometimes, giving the caregiver time to attend to other tasks. In such situations that demand high mobility and attentiveness, even a momentary lapse in attention by the caregiver may lead to unfortunate incidents, so that extra caution is necessary when caring for the infant and the toddler.

In the related art approaches, cameras are installed by the observer at the infant's or the toddler's bedside or activity areas to shoot the infant's or the toddler's activities. On the other hand, the user's mobile apparatus is equipped with the monitoring software and communicates with the cameras, using an image recognition mechanism to determine the activity status of the infant or the toddler in the captured video. Once an abnormal condition is detected, the mobile apparatus immediately sends an alert or a sound, prompting the caregiver to stop the current task and attend to the infant or the toddler immediately.

When the caregiver drives a vehicle with the infant or the toddler on board, regulations require that an infant-and-toddler safety seat be installed in the rear seat in the vehicle to reduce the risk of injury in the event of a car accident and to ensure the safety of the infant or the toddler. When the caregiver drives the vehicle alone with the infant or the toddler, the caregiver sits in the front seat to drive the vehicle. If the caregiver turns around to check on the infant or the toddler, it may raise concerns about driving safety. When the caregiver needs to focus on driving, it is not possible to observe the status of the infant or the toddler in the rear seat. If, at this moment, an unexpected incident occurs involving the infant or the toddler in the rear seat- for example, if the infant or the toddler becomes entangled in the seatbelt and is unable to make a sound-the caregiver would be unable to take immediate emergency action.

Accordingly, it is a noteworthy issue that the caregiver may simultaneously monitor the status of the infant or the toddler in the rear seat in real time while driving the vehicle.

### SUMMARY OF THE INVENTION

An embodiment of the present disclosure provides an in-vehicle infant-and-toddler monitoring method, adapted to be performed by an in-vehicle infant-and-toddler monitoring system. The in-vehicle infant-and-toddler monitoring system includes a rear-seat infant-and-toddler monitoring apparatus and a front-seat display apparatus coupled to the rear-seat monitoring apparatus. The in-vehicle infant-and-toddler monitoring method includes (a) shooting a child seat in a rear seat in a vehicle by a video-and-audio acquisition module of the rear-seat infant-and-toddler monitoring apparatus to capture a video-and-audio signal, wherein the video-and-audio acquisition module is directed toward the child seat; (b) inputting the video-and-audio signal into an artificial intelligence engine by a video-and-audio processing module of the rear-seat infant-and-toddler monitoring apparatus, to analyze a video of the video-and-audio signal to detect a facial expression of an infant or a toddler and to analyze an audio emotion of the infant or the toddler based on an audio feature by the artificial intelligence engine, to generate a notification event corresponding to a current emotion of the infant or the toddler; (c) receiving the notification event by a rear-seat processing module of the rear-seat infant-and-toddler monitoring apparatus and sending the notification event to the front-seat display apparatus; (d) streaming and retrieving the video-and-audio signal by a video-and-audio playback module of the front-seat display apparatus from the video-and-audio processing module based on the notification event to display the video-and-audio signal by the video-and-audio playback module; and (e) notifying the video-and-audio playback module by a front-seat processing module of the front-seat display apparatus based on the notification event to perform a streaming video-and-audio playback to play the video-and-audio signal of the infant or the toddler by the video-and-audio playback module in a front seat in the vehicle.

An embodiment of the present disclosure provides an in-vehicle infant-and-toddler monitoring system, including a rear-seat infant-and-toddler monitoring apparatus and a front-seat display apparatus coupled to the rear-seat infant-and-toddler monitoring apparatus. The rear-seat infant-and-toddler monitoring apparatus includes a video-and-audio acquisition module, a video-and-audio processing module, and a rear-seat processing module. The video-and-audio acquisition module shoots a child seat in a rear seat in a vehicle to capture a video-and-audio signal, wherein the video-and-audio acquisition module is directed toward the child seat. The video-and-audio processing module includes an artificial intelligence engine. The video-and-audio processing module inputs the video-and-audio signal into the artificial intelligence engine, to analyze a facial expression of an infant or a toddler and to analyze an audio emotion of the infant or the toddler based on an audio feature, to generate a notification event corresponding to a current emotion of the infant or the toddler. The rear-seat processing module is coupled to the video-and-audio processing module and receives the notification event. The front-seat display apparatus includes a video-and-audio playback module and a front-seat processing module. The video-and-audio playback module streams and retrieves the video-and-audio signal from the video-and-audio processing module to display the video-and-audio signal. The front-seat processing module is coupled to the video-and-audio playback module and notifies the video-and-audio playback module based on the notification event to perform a streaming video-and-audio playback to play the video-and-audio signal of the infant or the toddler by the video-and-audio playback module in a front seat in the vehicle.

### BRIEF DESCRIPTION OF THE DRAWINGS

FIG. 1 is a block diagram of an in-vehicle infant-and-toddler monitoring system.
FIG. 2 is a flowchart of an in-vehicle infant-and-toddler monitoring method.

### DETAILED DESCRIPTION

The present disclosure is further described in conjunction with the drawings and the embodiments, so that those skilled in the art may better understand and practice the present disclosure. However, the illustrated embodiments are not intended to limit the scope of the present disclosure.

Considering that the caregiver is usually the driver in the front seat and that the infant or the toddler must be seated in a child safety seat in the rear seat, the caregiver or the user may not constantly monitor the status of the infant or the toddler in the rear seat. The present disclosure provides a solution to address this situation.

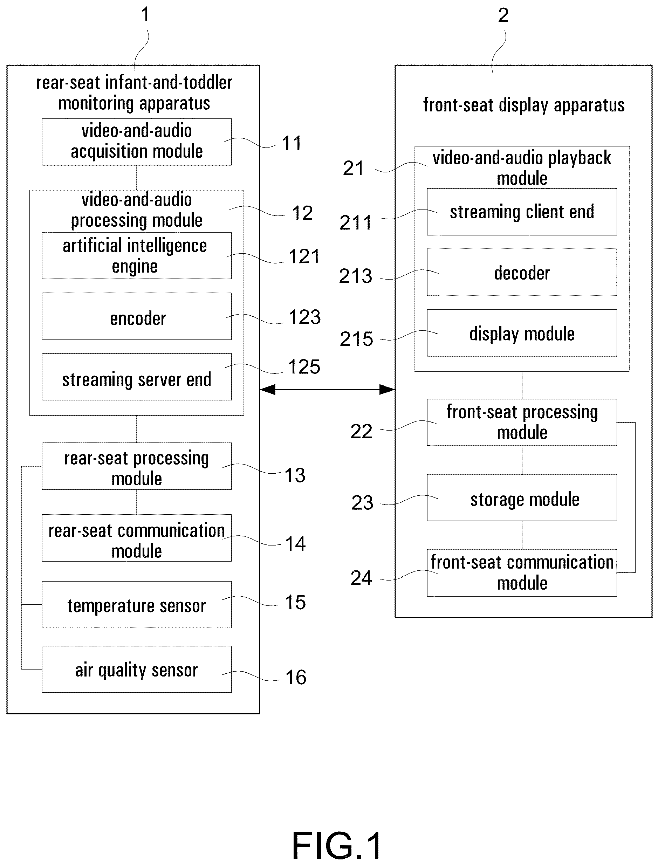

Please refer to FIG. 1. FIG. 1 is a block diagram of an in-vehicle infant-and-toddler monitoring system.

The in-vehicle infant-and-toddler monitoring system includes a rear-seat infant-and-toddler monitoring apparatus 1 and a front-seat display apparatus 2.

The rear-seat infant-and-toddler monitoring apparatus 1 is installed on an interior roof of the vehicle at a position capable of capturing the face and the voices of the infant or the toddler seated in the child safety seat, as well as sensing information of an interior environment of the vehicle. For example, the rear-seat infant-and-toddler monitoring apparatus 1 may be integrated into a lighting fixture (which is installed on the interior roof of the vehicle and in the rear seat) or positioned near the lighting fixture, with a mounting bracket to ensure the stable installation and maintain the correct camera angle of the rear-seat infant-and-toddler monitoring apparatus 1, or a sliding rail may be installed on the interior roof of the vehicle to freely control the position of the rear-seat infant-and-toddler monitoring apparatus 1.

The rear-seat infant-and-toddler monitoring apparatus 1 may be installed near a power supply in the rear seat to ensure stable and uninterrupted power to the rear-seat infant-and-toddler monitoring apparatus 1.

The front-seat display apparatus 2 is installed at a position of a front seat for viewing by the caregiver or a user seated in a front passenger seat. The front-seat display apparatus 2 may be a standalone display, a handheld apparatus (e.g., a smartphone or a tablet computer), or an in-vehicle infotainment (IVI) system.

The rear-seat infant-and-toddler monitoring apparatus 1 is coupled to the front-seat display apparatus 2. The rear-seat infant-and-toddler monitoring apparatus 1 sends notifications of detected rear-seat infant or toddler events to the front-seat display apparatus 2, alerting the caregiver to the current status of the infant or the toddler. The details are described as follows.

The rear-seat infant-and-toddler monitoring apparatus 1 includes a video-and-audio acquisition module 11, a video-and-audio processing module 12, a rear-seat processing module 13, a rear-seat communication module 14, a temperature sensor 15, and an air quality sensor 16.

The video-and-audio acquisition module 11 is installed on the interior roof of the vehicle, and is directed toward and shoot a child seat in the rear seat in the vehicle, to capture a video-and-audio signal of the infant or the toddler. The video-and-audio acquisition module 11 may be a camera. The video-and-audio acquisition module 11 may be a visible-light sensor module and/or an infrared sensor module.

The video-and-audio processing module 12 is coupled to the video-and-audio acquisition module 11. The video-and-audio processing module 12 includes an artificial intelligence engine 121, an encoder 123, and a streaming server end 125.

The video-and-audio processing module 12 inputs a video of the video-and-audio signal into the artificial intelligence engine 121. The artificial intelligence engine 121 analyzes facial expressions of the infant or the toddler. On the other hand, the video-and-audio processing module 12 inputs an audio signal of the video-and-audio signal into the artificial intelligence engine 121. The artificial intelligence engine 121 analyzes an audio emotion of the infant or the toddler based on an audio feature. The video-and-audio processing module 12, through an analysis function performed by the artificial intelligence engine 121, generates a notification event corresponding to a current emotion of the infant or the toddler.

For example, the artificial intelligence engine 121 analyzes the video to detect the face of the infant or the toddler and continuously tracks a movement of the face of the infant or the toddler. If tracking the face is interrupted, such as when the face is detected as disappearing from the video or being obscured by an unidentified object, the artificial intelligence engine 121 generates the notification event, for example, indicating that the infant or the toddler slipped from the child safety seat or that the head of the infant or the toddler is trapped by a seatbelt. In addition, the artificial intelligence engine 121 analyzes the video to detect the facial expression of the infant or the toddler, such as sleeping, frowning, widening eyes in curiosity, pouting, laughing with a mouth open, and so on, thereby identifying the current emotional state of the infant or the toddler. The caregiver may predefine specific emotional conditions of the infant or the toddler that trigger the notification event, allowing the caregiver to view or store video clips. The artificial intelligence engine 121 may analyze the video to detect whether the behavior of the infant or the toddler is abnormal, such as prolonged inactivity, body rolling, or twisting a posture abnormally. The artificial intelligence engine 121 generates the notification event to inform the caregiver of the current status of the infant or the toddler in the rear seat.

The artificial intelligence engine 121 may be an artificial intelligence model trained using various types of neural networks, such as an artificial neural network (ANN), a deep neural network (DNN), a convolutional neural network (CNN), or a recurrent neural network (RNN), which may perform tasks such as the facial expression recognition, the upper-body gesture recognition, and the vocal emotion recognition of the infant or the toddler.

The video-and-audio processing module 12 may be a graphics processor that performs image enhancement on the video sent from the video-and-audio acquisition module 11, such as adjusting auto exposure, auto white balance, high dynamic range adjustments, wide dynamic range adjustments, and so on. Since the vehicle travels on roads where interior lighting of the vehicle varies with the external environment, which affects video capture inside the vehicle, the video-and-audio processing module 12 optimizes the video to eliminate brightness differences between frames, thereby improving the accuracy of video recognition or analysis performed by the artificial intelligence engine 121.

The rear-seat infant-and-toddler monitoring apparatus 1 may optionally include an infrared fill-light module (not shown). When the video-and-audio processing module 12 detects insufficient lighting, the video-and-audio processing module 12 triggers the infrared fill-light module to emit infrared light, improving low-light conditions in the environment and enhancing the quality of the video captured by the video-and-audio acquisition module 11.

In addition, when the vehicle travels on roads, which are environments with relatively high levels of ambient noise, the artificial intelligence engine 121 employs an artificial intelligence noise reduction process to filter out external vehicle and environmental noise. The denoised audio signals improve the accuracy of subsequent analysis of audio emotion of the infant or the toddler based on the audio feature by the artificial intelligence engine 121.

On the other hand, the artificial intelligence engine 121 analyzes the audio signals to recognize the expressions of the infant or the toddler. For example, the artificial intelligence engine 121 uses an infant-and-toddler vocal translation model (which is a pre-trained artificial intelligence model) to recognize the emotional content or intended meaning of the sounds currently produced by the infant or the toddler, which may subsequently be provided to the caregiver as guidance.

On the other hand, the encoder 123 of the video-and-audio processing module 12 receives the video-and-audio signal captured by the video-and-audio acquisition module 11 through the artificial intelligence engine 121, and encodes and compresses the video-and-audio signal to generate data in a streaming packet format, such as HLS (HTTP Live Streaming), MPEG-DASH (Dynamic Adaptive Streaming over HTTP), RTMP (Real-Time Messaging Protocol), RTSP (Real-Time Streaming Protocol), and so on.

The streaming server end 125 of the video-and-audio processing module 12 serves the rear-seat infant-and-toddler monitoring apparatus 1 as the server end of the streaming service, providing the video-and-audio signal to the front-seat display apparatus 2 through the streaming service.

The rear-seat processing module 13 may be a system on a chip (SoC). The rear-seat processing module 13 is coupled to the video-and-audio processing module 12 and the rear-seat communication module 14. The rear-seat processing module 13 is configured for initialization and configuration of the rear-seat infant-and-toddler monitoring apparatus 1, as well as for determining and processing the notification event. When receiving the notification event from the video-and-audio processing module 12, the rear-seat processing module 13 sends the notification or alert to the front-seat display apparatus 2 through the rear-seat communication module 14.

The rear-seat processing module 13 also detects whether the infant or the toddler is left alone in the vehicle. For example, if the rear-seat processing module 13 detects that the vehicle has been turned off but the video-and-audio processing module 12 continues to detect the face and/or the voices of the infant or the toddler, causing the rear-seat processing module 13 to continuously receive the notification events, the rear-seat processing module 13 sends an alert signal. The video-and-audio playback module 21 of the front-seat display apparatus 2 generates multiple types of alerts, such as an alert sound, a blinking text on a locked screen, a flashing light on a display, and so on. The caregiver needs to click the confirmation button to end the alert.

The temperature sensor 15 is coupled to the rear-seat processing module 13 and is used to sense a temperature in the vehicle. If the rear-seat processing module 13 determines that the temperature in the vehicle exceeds a comfortable temperature range (for example, between 22 °C and 24 °C), a notification event is sent to the front-seat display apparatus 2, alerting the caregiver to adjust the air-conditioning temperature in the vehicle to prevent the infant or the toddler from overheating or becoming chilled.

The air quality sensor 16 is coupled to the rear-seat processing module 13 and is used to sense an air quality in the vehicle. If the rear-seat processing module 13 determines that the air quality in the vehicle exceeds a comfortable range (for example, carbon dioxide concentration exceeds 1000 ppm or suspended particulate matter PM2.5 exceeds 12 µg/m³), a notification event is sent to the front-seat display apparatus 2, alerting the caregiver to adjust the air-conditioning intensity in the vehicle so that the infant or the toddler may breathe fresh air.

The front-seat display apparatus 2 includes a video-and-audio playback module 21, a front-seat processing module 22, a storage module 23, and a front-seat communication module 24.

The front-seat communication module 24 of the front-seat display apparatus 2 is connected to the rear-seat communication module 14 of the rear-seat infant-and-toddler monitoring apparatus 1. The front-seat communication module 24 and the rear-seat communication module 14 may employ any wireless communication connection means, such as Wi-Fi or Bluetooth, or a wired communication connection means, such as Ethernet or USB.

The video-and-audio playback module 21 is configured to play the video-and-audio signals from the rear-seat infant-and-toddler monitoring apparatus 1. The video-and-audio playback module 21 includes a streaming client end 211, a decoder 213, and a display module 215.

The streaming client end 211 serves the front-seat display apparatus 2 as the client end of the streaming service, receiving the video-and-audio signal through the streaming service of the rear-seat infant-and-toddler monitoring apparatus 1.

The decoder 213 decodes the received video-and-audio signals into the video and the audio, providing the decoded video-and-audio signals to the display module 215 for playback.

The front-seat processing module 22 is coupled to the video-and-audio playback module 21. The front-seat processing module 22 receives the notification events from the rear-seat infant-and-toddler monitoring apparatus 1 through the front-seat communication module 24, and displays alert messages on the display module 215 or plays alert sounds through an audio playback module (not shown). The front-seat processing module 22 may be a system on a chip (SoC).

The storage module 23 is coupled to the front-seat processing module 22 and the front-seat communication module 24, and is used to store the video-and-audio signals from the rear-seat infant-and-toddler monitoring apparatus 1. The storage module 23 stores the video-and-audio signal corresponding to each notification event as a record of each notification event. For example, if the infant or the toddler exhibits a happy or laughing expression, after the rear-seat infant-and-toddler monitoring apparatus 1 triggers a notification event, the video-and-audio signal is streamed and sent to the front-seat display apparatus 2, played on the video-and-audio playback module 21, and stored in the storage module 23.

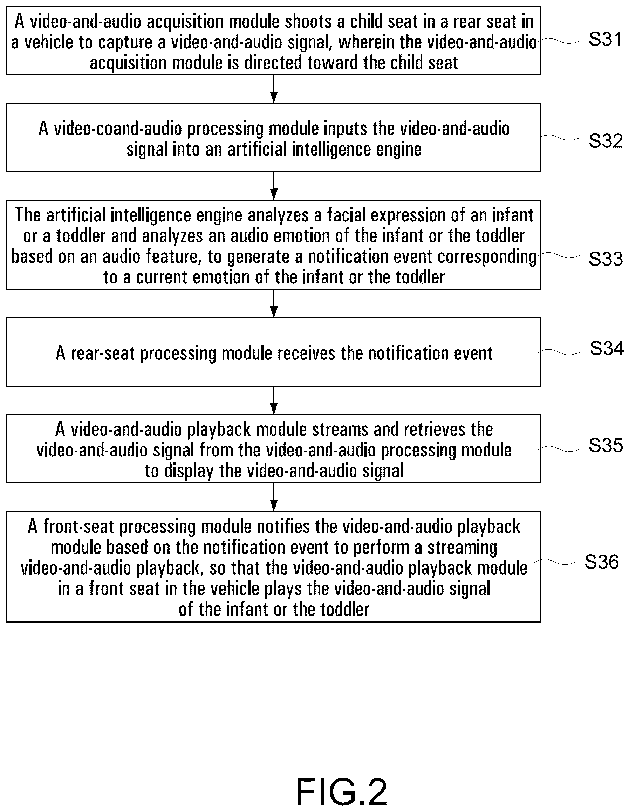

FIG. 2 is a flowchart of an in-vehicle infant-and-toddler monitoring method. The in-vehicle infant-and-toddler monitoring method may be performed by the in-vehicle infant-and-toddler monitoring system of FIG. 1.

Step S31: A video-and-audio acquisition module 11 shoots a child seat in a rear seat in a vehicle to capture a video-and-audio signal, wherein the video-and-audio acquisition module 11 is directed toward the child seat.

Step S32: A video-and-audio processing module 12 inputs the video-and-audio signal into an artificial intelligence engine 121.

Step S33: The artificial intelligence engine 121 analyzes a facial expression of an infant or a toddler and analyzes an audio emotion of the infant or the toddler based on an audio feature, to generate a notification event corresponding to a current emotion of the infant or the toddler.

Step S34: A rear-seat processing module 13 receives the notification event.

Step S35: A streaming client end 211 of a video-and-audio playback module 21 streams and retrieves the video-and-audio signal from a streaming server end 125 of the video-and-audio processing module 12 to display the video-and-audio signal.

Step S36: A front-seat processing module 22 notifies the video-and-audio playback module 21 based on the notification event to perform a streaming video-and-audio playback, so that the video-and-audio playback module 21 in a front seat in the vehicle plays the video-and-audio signal of the infant or the toddler.

In summary, the in-vehicle infant-and-toddler monitoring system and the in-vehicle infant-and-toddler monitoring method of the present disclosure are applied in a vehicle environment to monitor the status of the infant or the toddler seated in a rear child seat and to provide real-time notifications of the infant's or the toddler's status. Whether the infant or the toddler is in an abnormal condition (requiring focused attention from the caregiver) or in a normal condition (notifying the caregiver to share the joyful expressions of the infant or the toddler, so that the caregiver enjoys the cuteness of the infant or the toddler), the caregiver may fully grasp the status of the rear-seat infant or toddler without turning around. In this way, the caregiver may simultaneously ensure public driving safety and provide humane care and life safety protection to the infant or the toddler, thereby enhancing dual safety.

## Claims

1. An in-vehicle infant-and-toddler monitoring method, **characterized in** being adapted to be performed by an in-vehicle infant-and-toddler monitoring system, the in-vehicle infant-and-toddler monitoring system comprising a rear-seat infant-and-toddler monitoring apparatus (1) and a front-seat display apparatus (2) coupled to the rear-seat infant-and-toddler monitoring apparatus (1), the in-vehicle infant-and-toddler monitoring method comprising:
(a) shooting a child seat in a rear seat in a vehicle by a video-and-audio acquisition module (11) of the rear-seat infant-and-toddler monitoring apparatus (1) to capture a video-and-audio signal, wherein the video-and-audio acquisition module (11) is directed toward the child seat;
(b) inputting the video-and-audio signal into an artificial intelligence engine (121) by a video-and-audio processing module (12) of the rear-seat infant-and-toddler monitoring apparatus (1), to analyze a video of the video-and-audio signal to detect a facial expression of an infant or a toddler and to analyze an audio emotion of the infant or the toddler based on an audio feature by the artificial intelligence engine (121), to generate a notification event corresponding to a current emotion of the infant or the toddler;
(c) receiving the notification event by a rear-seat processing module (13) of the rear-seat infant-and-toddler monitoring apparatus (1) and sending the notification event to the front-seat display apparatus (2);
(d) streaming and retrieving the video-and-audio signal by a video-and-audio playback module (21) of the front-seat display apparatus (2) from the video-and-audio processing module (12) based on the notification event to display the video-and-audio signal by the video-and-audio playback module (21); and
(e) notifying the video-and-audio playback module (21) by a front-seat processing module (22) of the front-seat display apparatus (2) based on the notification event to perform a streaming video-and-audio playback to play the video-and-audio signal of the infant or the toddler by the video-and-audio playback module (21) in a front seat in the vehicle.

2. The in-vehicle infant-and-toddler monitoring method according to claim 1, wherein the step (b) comprises:
(b11) detecting a face of the infant or the toddler and continuously tracking a movement of the face of the infant or the toddler by the artificial intelligence engine (121); and
(b12) generating the notification event by the artificial intelligence engine (121) when the face of the infant or the toddler is detected as disappearing from the video or being obscured by an unidentified object.

3. The in-vehicle infant-and-toddler monitoring method according to claim 1, wherein the notification event comprises the infant or the toddler slipping from the child seat, having a head trapped by a seatbelt, sleeping, frowning, widening eyes in curiosity, pouting, laughing with a mouth open, remaining inactive for a long period, turning a body, or twisting a posture abnormally.

4. The in-vehicle infant-and-toddler monitoring method according to claim 1, wherein the step (c) comprises:
(c1) sending an alert signal to the front-seat display apparatus (2) by the rear-seat processing module (13) when the rear-seat processing module (13) receives the notification event indicating that the infant or the toddler is left alone in the vehicle; and
(c2) generating multiple types of alerts by the video-and-audio playback module (21) of the front-seat display apparatus (2), wherein the multiple types of alerts comprise at least one of an alert sound, a blinking text on a locked screen, and a flashing light on a display.

5. The in-vehicle infant-and-toddler monitoring method according to claim 1, further comprising:
sensing a temperature in the vehicle by a temperature sensor (15) of the rear-seat infant-and-toddler monitoring apparatus (1), and sending the notification event to the front-seat display apparatus (2) when the rear-seat processing module (13) determines that the temperature in the vehicle exceeds a comfortable temperature range; and
sensing an air quality in the vehicle by an air quality sensor (16) of the rear-seat infant-and-toddler monitoring apparatus (1), and sending the notification event to the front-seat display apparatus (2) when the rear-seat processing module (13) determines that the air quality in the vehicle exceeds a comfortable range.

6. An in-vehicle infant-and-toddler monitoring system, **characterized in** comprising:
a rear-seat infant-and-toddler monitoring apparatus (1); and
a front-seat display apparatus (2), coupled to the rear-seat infant-and-toddler monitoring apparatus (1),
wherein the rear-seat infant-and-toddler monitoring apparatus (1) comprises:
a video-and-audio acquisition module (11) configured to shoot a child seat in a rear seat in a vehicle to capture a video-and-audio signal, wherein the video-and-audio acquisition module (11) is directed toward the child seat;
a video-and-audio processing module (12), comprising an artificial intelligence engine (121), the video-and-audio processing module (12) configured to input the video-and-audio signal into the artificial intelligence engine (121), to analyze a facial expression of an infant or a toddler and to analyze an audio emotion of the infant or the toddler based on an audio feature, to generate a notification event corresponding to a current emotion of the infant or the toddler; and
a rear-seat processing module (13), coupled to the video-and-audio processing module (12) and configured to receive the notification event,
wherein the front-seat display apparatus (2) comprises:
a video-and-audio playback module (21), configured to stream and retrieve the video-and-audio signal from the video-and-audio processing module (12) to display the video-and-audio signal; and
a front-seat processing module (22), coupled to the video-and-audio playback module (21) and configured to notify the video-and-audio playback module (21) based on the notification event to perform a streaming video-and-audio playback to play the video-and-audio signal of the infant or the toddler by the video-and-audio playback module (21) in a front seat in the vehicle.

7. The in-vehicle infant-and-toddler monitoring system according to claim 6, wherein the artificial intelligence engine (121) is configured to detect a face of the infant or the toddler and continuously track a movement of the face of the infant or the toddler, and the artificial intelligence engine (121) is configured to generate the notification event when the face of the infant or the toddler is detected as disappearing from a video of the video-and-audio signal or being obscured by an unidentified object.

8. The in-vehicle infant-and-toddler monitoring system according to claim 6, wherein the notification event comprises the infant or the toddler slipping from the child seat, having a head trapped by a seatbelt, sleeping, frowning, widening eyes in curiosity, pouting, laughing with a mouth open, remaining inactive for a long period, turning a body, or twisting a posture abnormally.

9. The in-vehicle infant-and-toddler monitoring system according to claim 6, wherein the rear-seat processing module (13) is configured to send an alert signal to the front-seat display apparatus (2) when the rear-seat processing module (13) receives the notification event indicating that the infant or the toddler is left alone in the vehicle, and the video-and-audio playback module (21) of the front-seat display apparatus (2) is configured to generate multiple types of alerts, wherein the multiple types of alerts comprise at least one of an alert sound, a blinking text on a locked screen, and a flashing light on a display.

10. The in-vehicle infant-and-toddler monitoring system according to claim 6, wherein the rear-seat infant-and-toddler monitoring apparatus (1) further comprises:
a temperature sensor (15) coupled to the rear-seat processing module (13) and configured to sense a temperature in the vehicle; and
an air quality sensor (16) coupled to the rear-seat processing module (13) and configured to sense an air quality in the vehicle,
wherein the rear-seat processing module (13) is configured to send the notification event to the front-seat display apparatus (2) when the rear-seat processing module (13) determines that the temperature in the vehicle exceeds a comfortable temperature range, and send the notification event to the front-seat display apparatus (2) when the rear-seat processing module (13) determines that the air quality in the vehicle exceeds a comfortable range.
